# EUROPEAN PATENT SPECIFICATION

(11) **EP 4 551 811 B1**
(45) Date of publication and mention of the grant of the patent: **31.12.2025**
(21) Application number: 23739196.6
(22) Date of filing: 04.07.2023
(51) Int. Cl.: F03D 17/00, F03D 7/02

(54) **MEASURING STRESS OF A WIND TURBINE BLADE AND CONTROLLING THE WIND TURBINE**
MESSUNG DER SPANNUNG EINER WINDTURBINENSCHAUFEL UND STEUERUNG DER WINDTURBINE
MESURE DE CONTRAINTE D'UNE PALE D'ÉOLIENNE ET COMMANDE D'ÉOLIENNE

(30) Priority: 06.07.2022 EP 22183237
(43) Date of publication of application: 14.05.2025
(73) Proprietor: Siemens Gamesa Renewable Energy A/S, 7330 Brande (DK)
(72) Inventor: STRUCK, Eirik, 24105 Kiel (DE); NIEUWENHUIZEN, Johannes Mathias Hubertus, 8700 Horsens (DK)
(74) Representative: SGRE-Association
(86) International application number: PCT/EP2023/068430
(87) International publication number: WO 2024/008738

(56) References cited:
- EP-A1- 3 922 840
- EP-B1- 2 864 632
- WO-A1-2021/121527
- US-A1- 2004 057 828
- US-A1- 2015 147 175

## Description

### Field of invention

The present invention relates to a method and to a corresponding arrangement of determining a value of a stress related quantity of a rotor blade of the wind turbine. Furthermore, the present invention relates to a method and a corresponding controller for controlling a wind turbine thereby using the determined value of the stress related quantity of the rotor blade. Furthermore, the present invention relates to a wind turbine.

### Art Background

During operation, a rotor blade of a wind turbine is subjected to a mechanical load due to impacting wind and the rotation and further due to operational influences. In particular, stress inside the wind turbine blade may be due to pitching the rotor blade, yawing the nacelle which harbours a rotation shaft at which the rotor blade is connected. Furthermore, stress inside the wind turbine blade may be due to heavy wind loads and other external influences. The stress inside the wind turbine blade may cause structural damage or may increase wear and tear of the blade.

US 7 246 991 uses sensors inside the rotor blade and a radar unit, in order to measure a clearance between the rotor blade tip and a tower as well as stress of the rotor blade. EP 2 864 632 B1 discloses to measure the vibration of the rotor blade by using a radar unit.

US2004/057828 A1 discloses a method to determine a stress value of a rotor blade by using a radar unit.

Other conventional methods employ strain gauges to measure the deflection of a rotor blade due to heavy loads.

It has been observed that conventional methods and systems do not under all circumstances measure in a reliable and fast manner stress or load of a wind turbine during operation.

Thus, there may be a need for a method and a corresponding arrangement for determining a value of a stress related quantity of a rotor blade of a wind turbine. Furthermore, there may be a need for a method of controlling a wind turbine, such that the load and/or stress the rotor blade is subjected to is reduced or is in particular kept within acceptable limits. There may further be a need to determine in an accurate, reliable and fast manner the stress or load, in particular a value of a stress related quantity of a rotor blade. Furthermore, there may be a need for a wind turbine being capable of reliably and quickly determining a stress related quantity of a rotor blade and/or being capable of appropriately controlling the wind turbine such as to keep load and/or stress of the wind turbine blades in acceptable limits.

### Summary of the Invention

This need may be met by the subject matter according to the independent claims. Advantageous embodiments of the present invention are described by the dependent claims.

According to an embodiment of the present invention it is provided a method of determining a value of a stress related quantity of a rotor blade of a wind turbine, the method comprising: emitting a primary radar signal towards a portion of the blade; receiving a secondary radar signal emanating from the blade due to interaction with the primary radar signal; analysing at least the received secondary radar signal; and deriving, based on the analysis, the value of the stress related quantity as related to or indicating a blade acceleration and/or a first temporal derivative of the blade acceleration and/or a higher temporal derivative of the blade acceleration.

The method may be implemented in software and/or hardware. The method may be at least partially performed for example by module of a wind turbine controller.

The stress related quantity of the rotor blade may indicate (structural or mechanical) stress and/or load the rotor blade is subjected to, for example due to wind impact and/or pitching and/or yawing. The stress related quantity may relate to a mechanical stress or mechanical load.

The method may employ a radar equipment, comprising a transmitter for transmitting the primary radar signal and comprising a receiver for receiving the secondary radar signal. The receiver and/or emitter may be implemented for example by a coaxial cable comprising openings via which the primary radar signal may be emitted and via which the secondary radar signal may be received. The coaxial cable may also be referred to as leaky feeder radar equipment. The coaxial cable may be mounted around the tower circumference, in order to, substantially in all (horizontal) directions, measure the stress related quantity for all yawing positions of the nacelle which harbours the rotation shaft at which the plural rotor blades are mounted. In other embodiments, the radar equipment may comprise several discrete emitting (transmitting)and/or receiving units (antenna) mounted at one or more locations around or at the turbine tower, for example.

The method may employ for example a distance measurement methodology by measuring the time-of-flight between emitting the primary radar signal and receiving the secondary radar signal. In this embodiment, for example pulsed radar signals may be emitted and the timing between emitting the primary radar signal pulse and receiving the secondary radar signal pulse may be registered. Thereby, a distance between the wind turbine tower and the rotor blade when the rotor blade passes the tower may be determined, in particular continuously. Thereby, the distance between the tower and the rotor blade may be available for different points in time.

In another implementation, a Doppler shift may be determined as a frequency or wavelength shift between the primary radar signal which is emitted and the secondary radar signal which is received as a signal emanating from the blade due to the interaction of the rotor blade with the primary radar signal.

Thus, analysing at least the received secondary signal may comprise to measure and register a time interval between emitting the primary radar signal and receiving the secondary radar signal, in order to perform a time-of-flight measurement methodology. In another embodiment, analysing at least the received secondary radar signal may comprise to determine a frequency shift or wavelength shift or difference between the emitted primary radar signal and the received secondary radar signal. For this embodiment, the received secondary radar signal and the emitted primary radar signal may be analysed in combination or compared to each other regarding the frequency and/or wavelength.

Thus, the analysis may result for example in a distance between the rotor blade and the tower and/or may result in a frequency shift. These quantities may be determined for subsequent points in time, for example separated by a sampling time interval or analysis time interval. The respective quantities, e.g. distance and/or Doppler shift, may further be processed regarding their temporal changes. Thereby, the stress related quantity or the value of the stress related quantity may be derived which relates to or indicates the blade acceleration (for example fore-aft acceleration and/or sidewise acceleration) and/or a first temporal derivative of the blade acceleration and/or a higher temporal derivative of the blade acceleration. Instead of the respective temporal derivatives, also merely temporal changes may be considered as the stress related quantity. The blade acceleration and/or temporal derivative of the blade acceleration and/or higher temporal derivative of the blade acceleration may appropriately and advantageously indicate a load and/or stress the wind turbine blade is subjected to. As the stress related quantity for example the second derivative of the distance between the rotor blade and the tower may be considered and/or the third derivative of the distance may be considered. In another embodiment, additionally or alternatively, the first derivative of the Doppler shift and/or the second derivative of the Doppler shift may be considered as the stress related quantity. Thereby, the load and/or the stress the blade is subjected to may reliably be derived.

According to an embodiment of the present invention, analysing at least the received secondary radar signal comprises determining a frequency shift of the secondary radar signal relative to the primary radar signal; deriving the stress related quantity based on a temporal change of the frequency shift, in particular the temporal change of the frequency shift per time interval.

Instead or additionally to the frequency shift, also a wavelength shift may be determined and utilized to derive the stress related quantity, namely based on a temporal change of the wavelength shift. The frequency shift or wavelength shift may be due to movement of the blade which then gives rise to a Doppler shift. The frequency shift may be proportional to the respective (radial) velocity of the rotor blade, in particular in a direction towards and away from the radar emitter and/or receiver. The temporal change of the frequency shift (and/or wavelength shift) may for example be determined as a difference between an actual determined frequency shift at a first point in time and previously determined frequency shift at a previous point in time. In particular, a differential quotient may be determined or formed between the temporal change of the frequency shift (or wavelength shift) and the time interval between the two determined frequency shifts.

The temporal change of the frequency shift may be or may relate to the acceleration the rotor blade is subjected to, in particular may relate to the temporal change of the (radial, i.e. towards and away from the tower center) velocity of the rotor blade. This quantity may reliably indicate stress and/or load the rotor blade is subjected to.

According to an embodiment of the present invention, the stress related quantity of the rotor blade includes the blade acceleration, in particular determined as a temporal derivative or temporal differential quotient of the frequency shift.

The stress related quantity may in other embodiments comprise a combination of blade acceleration and higher temporal derivatives or temporal changes of the blade acceleration. When determined as a derivative or temporal differential quotient of the frequency shift, the stress related quantity may be determined in a simple manner.

According to an embodiment of the present invention, the stress related quantity of the rotor blade includes jerk, in particular determined as a second temporal derivative or second temporal differential quotient of the frequency shift, wherein deriving the value of the stress related quantity in particular includes also to determine a sign of a value of the jerk.

The jerk may be proportional to or may indicate the temporal change of the acceleration of the rotor blade. The jerk may in particular be determined as a derivative or differential quotient of the derivative or differential quotient of the frequency shift, thus being the second temporal derivative or second temporal differential quotient of the frequency shift or wavelength shift. The sign of the value of the jerk may indicate the direction into which the load or stress acts or is exerted. Thereby, controlling a wind turbine may be improved or enabled.

According to an embodiment of the present invention, deriving the value of the stress related quantity includes to determine values of the jerk at a first surface of the rotor blade and a second surface of the rotor blade, the first surface being an outer surface of the blade facing the tower, the second surface being an inner surface of the blade facing the tower and being spaced apart from the first surface.

The primary radar signal may be reflected on one or more interfaces or surfaces of the rotor blade. For example, the first surface may be an airfoil surface, i.e. an outer surface of the rotor blade. The second surface may be an inner surface for example of a wall delimiting the rotor blade. The first surface and the second surface may for example be spaced apart for example in a thickness direction of the rotor blade by the thickness of the blade minus the thickness of the blade wall. In this embodiment, thereby, the jerk or in general stress related quantity may be determined on different portions of the rotor blade, for example wall portions which may enable to more reliably determine the effective stress or load the rotor blade as a whole is subjected to.

According to an embodiment of the present invention, the frequency shift is caused by blade movement including at least one of movement away and towards the tower, in particular away and towards from a radar equipment mounted at the tower, in particular movement out of a rotation plane and/or edgewise movement, substantially in a rotation plane.

The movement away and towards the tower may also be referred to as fore-aft vibration or oscillation or movement and the edgewise movement may also be referred to as edgewise vibration or oscillation. Thereby, typically occurring vibrations or oscillation and load situations of a wind turbine blade may be supported.

According to an embodiment of the present invention, the method further comprises determining, later in time, in particular after at least one more revolution, a further value of the stress related quantity; comparing the value with the further values, in order to determine stress of the rotor blade.

Thereby, the time evolution of the load/stress of the rotor blade may be registered and also dealt with. Further, the comparison might enable a plausibility check, for example enabling to disregard outliers. Depending on the comparison result, the control of the wind turbine may be modified.

The determined value of the stress related quantity may advantageously be utilized for controlling a wind turbine.

According to an embodiment of the present invention it is provided a method of controlling a wind turbine comprising plural rotor blades mounted on a rotation shaft, the method comprising performing a method of determining a value of a stress related quantity of a rotor blade of the wind turbine according to one of the preceding embodiments; and controlling the wind turbine based on the value of the stress related quantity.

When the value of the stress related quantity is considered for controlling the wind turbine, wear and load and/or stress of the wind turbine blade may be kept in acceptable limits for example. Further, performance of the wind turbine may be improved and lifetime of components may be prolonged.

The method may also be implemented in software and/or hardware and/or may be performed by a wind turbine controller module.

According to an embodiment of the present invention, controlling the wind turbine comprises yawing a nacelle harbouring a rotation shaft at which the plural rotor blade are mounted and/or pitching at least one rotor blade and/or controlling generator torque and/or power based on the value of the stress related quantity of the rotor blade.

Thus, different control actions which are conventionally available may be performed depending on the determined stress related quantity value. Some or all of these control measures may influence the load the blade is subjected to. Thereby, the load may be kept in acceptable limits. Furthermore, generator rotational speed may be controlled based on the values of the stress related quantity.

According to an embodiment of the present invention, the wind turbine is controlled such that the value of the stress related quantity of the rotor blade is substantially at a stress reference value or below a stress threshold value, in particular comprising smoothed control of pitching and/or smoothed control of yawing and/or curtailed pitching.

In particular, the pitching may be smoothed in a manner such that the rate of change of the pitch angle is reduced compared to a conventionally used pitching rate or normal pitching rate. Further, the yawing rate may be reduced compared to a nominal yawing rate in order to provide smoothed control of yawing. Curtailed pitching may involve to keep the pitch angle for example below a angle threshold .

According to an embodiment of the present invention, controlling the wind turbine comprises to employ a cascade control comprising: an inner control loop with feedback of a measured inner control variable, the inner control variable comprising pitch angle or yaw position or generator torque or generator power; and an outer control loop with feedback of a measured outer control variable, the outer control variable comprising the stress related quantity, in particular jerk, wherein the outer control loop receives a difference between a reference value for the outer control variable, in particular a stress reference value or jerk reference value, and an actual value of the outer control variable as an input to an outer controller which derives therefrom a reference value or reference offset value, in particular reference pitch angle or reference yaw angle or reference torque, for the inner control variable, wherein a difference between the reference value of the inner control variable and the actual value of the inner control variable is supplied to an inner controller.

The inner control loop may for example control the pitch angle of the rotor blade or yaw position or generator torque or generator power, being examples of an inner control variable. The outer control loop may control the stress related quantity, in particular the jerk, as example of an outer control variable. The outer controller derives from the respective reference value for the outer control variable a reference value or reference offset value for the inner control variable, for example pitch angle set point or pitch angle reference value (or yaw position reference or generator torque reference or generator power reference). The inner controller as well as the outer controller may for example comprise PI controllers.

In this case the system may be in steady state, where e.g. the Jerk setpoint may be zero. A load (gust of wind) may cause stress in the blade, which could be measured as jerk becoming different from zero. Jerk has to become zero again, so the controller may cause pitching or yawing to reduce the stress/jerk. In case we are setting up a new pitch angle for power output, this signal might come from the turbine controller and is causing a dynamic change. Here a implementation as multivariable control might be needed.

According to an embodiment of the present invention, controlling the wind turbine comprises shutting down the wind turbine, if the value of the stress related quantity and/or the jerk value exceeds a stress threshold value, in particular for longer than a stress time interval. Thereby, a reliable operation of the wind turbine may be ensured and the lifetime of the components may be prolonged.

It should be understood, that features, individually or in any combination, disclosed, described, provided or applied to a method of determining a value of a stress related quantity of a rotor blade of a wind turbine, also apply, individually or in any combination, to an arrangement for determining a value of a stress related quantity of a rotor blade of a wind turbine according to embodiments of the present invention and vice versa.

According to an embodiment of the present invention it is provided an arrangement for determining a value of a stress related quantity of a rotor blade of a wind turbine, the arrangement comprising: a radar emitter configured to emit a primary radar signal towards a portion of the blade; a radar receiver configured to receive a secondary radar signal emanating from the blade due to interaction with the primary radar signal; an analysis module configured: to analyse at least the received secondary radar signal; to derive, based on the analysis, the value of the stress related quantity as related to or indicating a blade acceleration and/or a first temporal derivative of the blade acceleration and/or a higher temporal derivative of the blade acceleration.

Furthermore, features, individually or in any combination, disclosed, described or applied to a method of controlling a wind turbine may also, individually or in any combination, apply to a controller for controlling a wind turbine according to embodiments of the present invention and vice versa.

According to an embodiment of the present invention it is provided a controller for controlling a wind turbine comprising plural rotor blades mounted on a rotation shaft, the controller comprising: an arrangement for determining a value of a stress related quantity of a rotor blade of the wind turbine according to the preceding embodiment; a control module configured to control the wind turbine based on the value of the stress related quantity.

Furthermore, a wind turbine is provided comprising a rotation shaft having plural rotor blades mounted thereon and a controller according to the preceding embodiment.

Embodiments of the present invention provide methods and systems for measuring and/or monitoring the jerk of the rotor blade. Thereby, jerk may be considered to be directly proportional to the force which is applied to the blade. By measuring the jerk, it might be possible to take action in a short time to reduce the stress. Pitch and/or yawing actions could be smoothed and reduced to an acceptable level. Turbine shutdown at heavy loads (indicated by high jerk values) might be possible.

According to embodiments of the present invention, a Doppler radar unit is utilized to measure the jerk of the blade. Thereby, blade jerk may be direct correlating to the second temporal derivative or second temporal change of the Doppler shift. To measure the jerk and using the jerk for control actions may have the advantage to have a direct impact to the stress inside the blade. Further, it might be possible to reduce the wear and tear by smoothing control actions of pitching and/or yawing.

Blade acceleration may be direct correlating to the first temporal derivative or first temporal change of the Doppler shift.

The radar equipment may comprise a leaky feeder or equipment known as leaky feeder from the prior art. However, leaky feeder equipment is not mandatory and embodiments of the present invention may be used without leaky feeder equipment.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

Embodiments of the present invention are now described with reference to the accompanying drawings. The invention is not restricted to the illustrated or described embodiments.
Fig. 1 schematically illustrates a wind turbine according to an embodiment of the present invention;
Fig. 2 schematically illustrates a radar unit as included in an arrangement for determining a value of a stress related quantity of a rotor blade according to an embodiment of the present invention;
Fig. 3 schematically illustrates a control method scheme as employed according to an embodiment of the present invention;
Fig. 4 schematically illustrates a control circuit diagram as employed according to an embodiment of the present invention; and
Fig. 5 schematically illustrates a portion of a wind turbine according to an embodiment of the present invention.

### Detailed Description

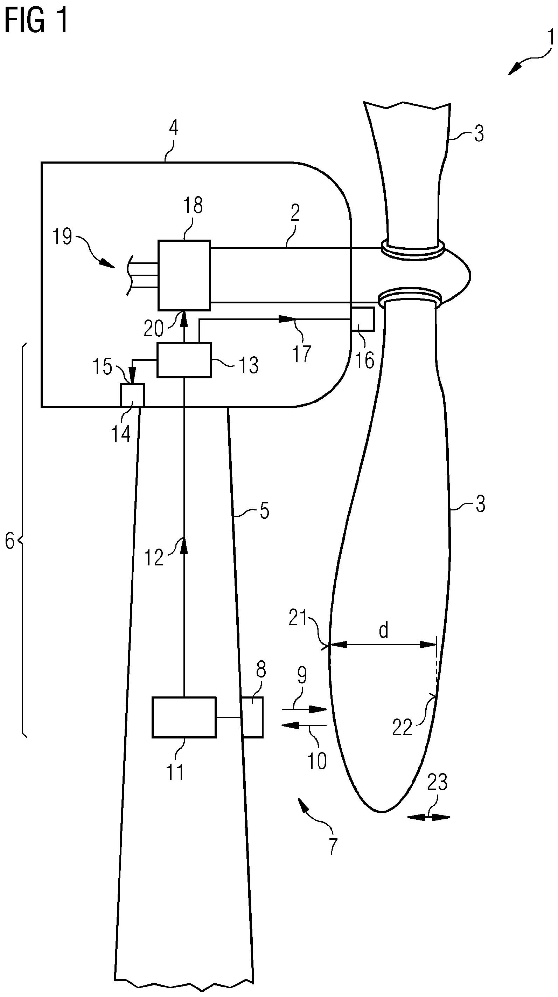

The wind turbine 1 schematically illustrated in **Fig. 1** comprises a rotation shaft 2 having plural rotor blades 3 mounted thereon. The rotation shaft 2 is harboured within a nacelle 4 which is mounted rotatably on top of a wind turbine tower 5. The wind turbine 1 further comprises a controller 6 for controlling the wind turbine according to an embodiment of the present invention.

The controller 6 for controlling the wind turbine 1 comprises an arrangement 7 for determining a value of a stress related quantity of the rotor blade 3 of the wind turbine 1. The controller 6 comprises, besides the arrangement 7, a control module 13 which is configured to control the wind turbine 1 based on the value 12 of the stress related quantity.

Thereby, the arrangement 7 comprises a radar unit 8 which comprises a radar emitter configured to emit a primary radar signal 9 towards a portion of the blade 3. The radar unit 8 further comprises a radar receiver configured to receive a secondary radar signal 10 emanating from the blade 3 due to interaction with the primary radar signal 9. The arrangement 7 further comprises an analysis module 11 which is configured to analyse at least the received secondary radar signal 10 (and further in particular also the primary radar signal 9). The analysis module 11 is further configured to derive, based on the analysis, the value 12 of the stress related quantity as related to or indicating a blade acceleration and/or a first temporal derivative of the blade acceleration and/or a higher temporal derivative of the blade acceleration.

The radar unit 8 may be configured to measure in different radial directions around the tower, e.g. in 360 degrees around the tower, in order to measure blade movements/distance for every nacelle position.

The (value of the) stress related quantity is labelled with reference sign 12 in Fig. 1.

The wind turbine comprises a yawing system 14 which is configured to yaw the nacelle 4 relative to the wind turbine tower 5, i.e. to rotate the nacelle 4 about a substantially vertically oriented axis relative to the wind turbine tower 5. The control module 13 may, for controlling the wind turbine, supply a yawing control signal 15 to the yawing system 14 which may be derived based on the value 12 of the stress related quantity.

The wind turbine 1 further comprises a pitching system 16 which is configured to pitch at least one wind turbine blade 3 about a substantially longitudinal axis, i.e. to rotate the wind turbine blade about a longitudinal axis. For controlling the wind turbine 1, the control module 13 may therefore supply a pitching control signal 17 to the pitching system 16 wherein the pitching control signal 17 is derived based at least on the value 12 of the stress related quantity.

The wind turbine 1 comprises a generator system 18 which is driven by the rotation shaft 2 and outputs electrical AC power at output terminals 19. For controlling the wind turbine 1, the control module 13 may further supply a generator system control signal 20 to the generator system 18. The generator control signal 20 may for example indicate a generator torque and/or a generator power wherein the control signal 20 may in particular be supplied to a converter.

Thereby, the control system 13 may be configured to control yawing the nacelle 4 and/or pitching at least one rotor blade 3 and/or controlling the generator system 18. The control module is configured to perform a method of controlling the wind turbine 1, wherein first a method for determining a value of the stress related quantity 12 of the rotor blade 3 is performed and then the wind turbine 1 is controlled based on the value 12 of the stress related quantity.

The arrangement 7 may continuously derive the value 12 of the stress related quantity and different values determined for different points in time may be registered and acquired and in particular compared in order also to improve the control of the wind turbine.

The primary radar signal 9 may interact with a first surface 21 of the blade 3 and/or a second surface 22 of the blade 3.

In particular, at the first surface 21 and/or the second surface 22, the primary radar signal 9 may be reflected giving rise to the secondary radar signal 10. Depending on which of the surfaces, i.e. the first surface 21 being an outer surface of the blade facing the tower, or the second surface 22 being an inner surface of the blade facing the tower and being spaced apart from the first surface by a distance d, either the stress at the first surface 21 or the stress at the second surface may be derived according to an embodiment of the present invention. Both stress values may be employed or considered for controlling the wind turbine 1. Thus, the control of the wind turbine 1 may depend on one or both of the stress related values associated with the first surface 21 and/or the second surface 22.

Embodiments of the present invention may determine a frequency shift Δf (or wavelength shift Δλ) of the secondary radar signal 10 relative to the primary radar signal 9. The stress related quantity 12 may for example then be derived as a temporal change of the frequency shift or a temporal change of the frequency shift per time interval, i.e. a differential quotient.

The temporal derivative of the frequency shift may be proportional to the blade acceleration. The stress related quantity 12 may also include jerk, for example determined as a second temporal derivative of the frequency shift or wavelength shift.

The frequency shift may be caused by blade movement, for example movement away and towards the tower as indicated with reference sign 23 in Fig. 1. The arrangement 7 may perform a method of determining a value of a stress related quantity of the rotor blade 3 of the wind turbine 1 according to an embodiment of the present invention.

The analysis module 11 and the control module 13 as depicted in Fig. 1 may be comprised as components of a wind turbine controller or may be implemented at separate different modules.

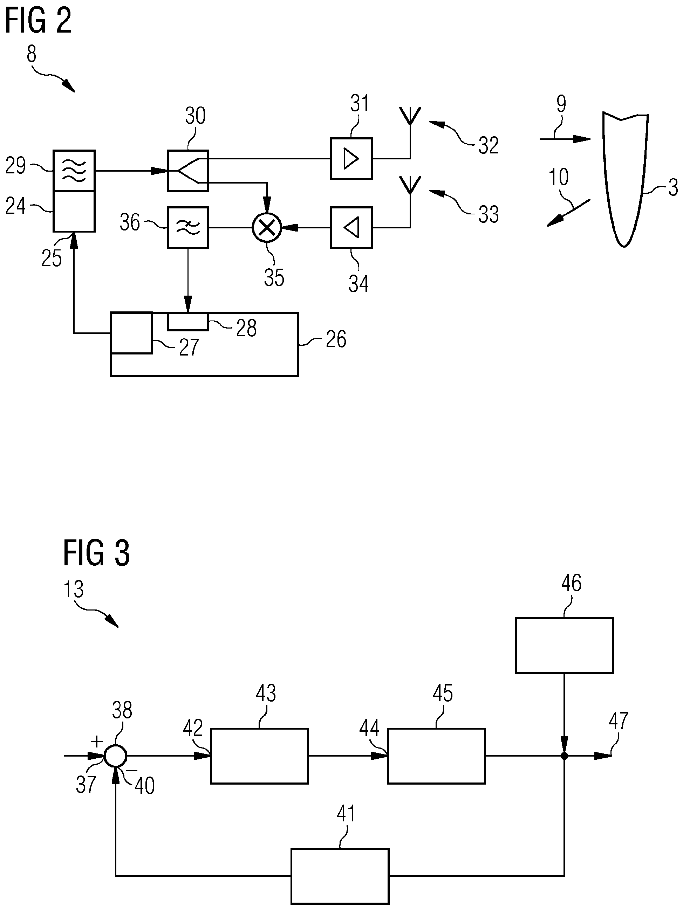

**Fig. 2** schematically illustrates a radar unit 8 which may for example be employed in the wind turbine 1 as illustrated in Fig. 1. The radar unit 8 includes a voltage controlled oscillator (VCO) 24 which receives a driving signal 25 from a processing unit 26 comprising respective D/A port 27 and an A/D port 28. The voltage controlled oscillator 24 generates an oscillating signal 29 which is supplied to a splitting element 30 which splits the radar signal in two portions. One portion is supplied to an amplifier 31 which supplies the radar signal to a transmitter antenna 32 for emitting the radar signal as a primary radar signal 9 towards the rotor blade 3. The secondary radar signal 10 returning from the rotor blade 3 is received by a receiver antenna 33 which is supplied to a receiving module 34 which supplies the output to a mixing element 35. The mixing element 35 mixes the received secondary radar signal 10 with a portion of the primary signal and supplies the result to a filter unit 36. The processing unit 26 receives the filtered mixed secondary radar signal 10. The processing unit 26 may for example perform a time-of-flight measurement and/or a frequency shift measurement according to embodiments of the present invention.

**Fig. 3** illustrates a control module 13 according to an embodiment of the present invention which may be comprised in the wind turbine 1 illustrated in Fig. 1. A jerk (or in general stress) reference value 37 is received at a difference element 38 which further receives an actual value 40 of the jerk the rotor blade 3 is subjected to. The actual value 40 of the jerk is measured by a jerk sensor 41 (which may e.g. include the radar unit 8 and the analysis module 11 of Fig. 1). The error 42 between the reference jerk 37 and the actual jerk 40 is supplied to a PID controller 43 which derives therefrom an actuating signal 44 which is supplied to the system 45. The system 45 may represent the rotor blade 3 and/or further components of the wind turbine 1 which may have an influence of the actual jerk of the rotor blade 3. The system 45 may be controlled based on the actuating value 44 or the actuating variable 44 which is output by the controller 43. Further, external influences 46 may disturb or influence the behaviour of the rotor blade 3 and thus, may contribute to the actual jerk which evolves at the rotor blade due to external forces (e.g. gust of wind). The control module 13 provides an output 47

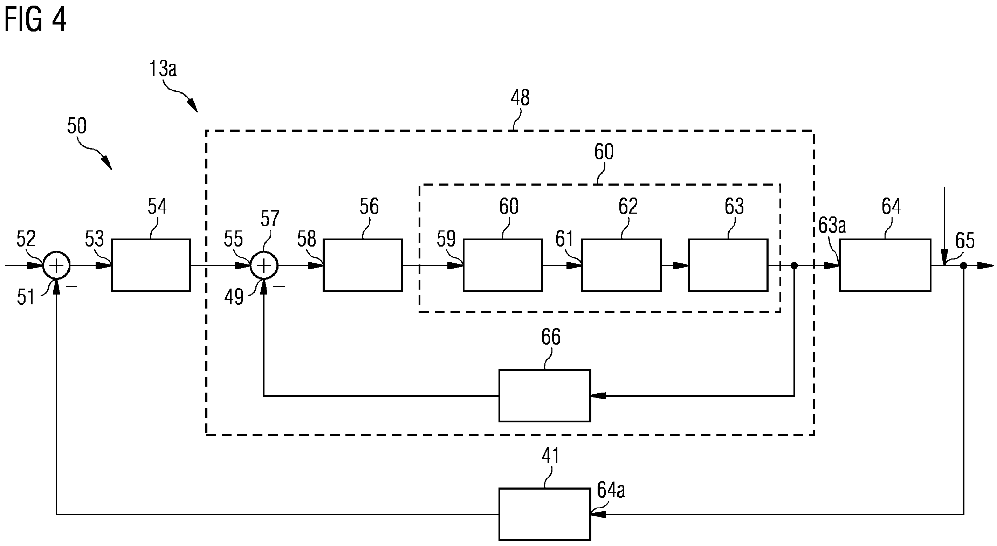

**Fig. 4** schematically illustrates a control module 13a according to an embodiment of the present invention which may for example be comprised in the wind turbine 1 illustrated in Fig. 1. The control module 13a illustrated in Fig. 4 is implemented as a cascade control. The control module 13a illustrated in Fig. 4 comprises an inner control loop 48 with a feedback 49 of a measured inner control variable, the inner control variable comprising for example the pitch angle or yaw position or generator torque or generator power. The control module 13a further comprises an outer control loop 50 with feedback 51 of a measured outer control variable, the outer control variable comprising the stress related quantity, in particular jerk. Thus, the measured feedback signal 51 may substantially be equal to the measured jerk 40 as is illustrated in Fig. 3. The outer loop 50 receives a reference value 52 for the outer control variable. In particular, the outer loop 50 receives a stress reference value 52 or jerk reference value (for example 37 as illustrated in Fig. 3).

The outer control loop 50 receives a difference 53 between the reference value 52 for the outer control variable and an actual value 51 of the outer control variable as an input to an outer controller 54 (which may for example be configured as the controller 43 illustrated in Fig. 3). The outer controller 54 derives therefrom a reference value 55 or reference offset value 55 for the inner control loop (i.e. a reference value for the inner control variable), wherein a difference 58 between the reference value 55 and an actual value 49 of the inner control variable is supplied to an inner controller 56.

The inner controller 56 may for example be a pitch controller. The reference value 55 may for example be a pitch angle reference value. The actual value of the inner control variable 49 may for example be the actual pitch angle. A difference element 57 derives the error signal 58 as a difference between the reference value 55 and the actual value 49 of the inner control variable.

The inner controller 56 derives an actuating signal 59 which may for example comprise a set point for a variable frequency drive. The signal 59 is received by the system 60, which may for example comprise a (conventional) pitching system, including blocks 60, 62, 63. In the illustrated embodiment, the signal 59 is received by power electronics 60 comprising an inverter for the variable frequency drive. The system portion 60 receiving the signal 59 derives therefrom current and/or voltage 61 which is supplied as actuating electricity to a motor 62. The motor 62 produces particular torque and rotational speed which is supplied to a gearbox 63 (output torque 63a) which finally actuates the pitching of the rotor blade 3.

The mechanical torque output by system 60 is received by the blade system 64 (output jerk 64a). Further, disturbances 65 are received which disturb the jerk measurement. The jerk of the blade is measured by the jerk measurement system 41 which may for example include the arrangement 7 as illustrated in Fig. 1. The pitch angle is measured by the pitch angle measurement system 66 in order to provide the actual pitch angle 49.

Fig 4 is an example concerning electrical pitch system. Other embodiments may not comprise electrical pitch system and/or the pitch system may additionally or alternatively comprise a hydraulic system.

In Fig. 4, the inner control loop 48 may control the pitch angle and the outer control loop 50 may control the jerk of the blade. Additional cascade controls may be possible for example regarding torque control and other control variables which might influence the jerk on the blade.

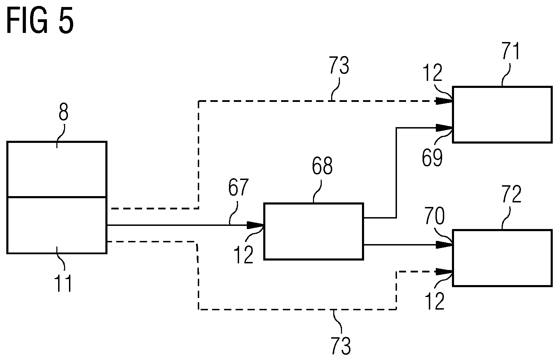

**Fig. 5** schematically illustrates a portion of a wind turbine or wind turbine control system according to an embodiment of the present invention. The radar unit 8 performs radar measurements and supplies measurement results to the analysis module 11. As a main path 67, the value 12 of the stress related quantity may be supplied to a main turbine controller 68. The main turbine controller 68 may control or supply respective control signals 69, 70 to a pitch controller 71 and a yaw controller 72, respectively.

According to an alternative path 73, the processing unit 11 provides the value 12 of the stress related quantity directly to the pitch controller 71 and the yaw controller 72 or directly provides respective control signals (e.g. indicating reference values) for the pitch controller 71 and the yaw controller 72.

Measuring the jerk may be important because it may allow to indicate the stress inside the blade. To reduce the yerk to an acceptable level may expand the lifetime of the blade by reducing wear and tear. Jerk could be positive and negative and may directly be proportional to the loads (forces) applied to the blade. By measuring the jerk, it may be possible to reduce the stress applied to the blade. Pitch could be smoothed by limiting the jerk in the closed loop control unit, as is illustrated in Fig. 3. The pitching process itself could be smoothed or in case of turbulences it is possible to reduce the load on the blade by pitching them (flag position/angle of attack).

Conventional methods may have problems to directly measure a low frequency vibration. Conventional methods may require measurements over multiple rotations of the blade to detect such a low frequency vibration. In contrast, according to an embodiment of the present invention, by detecting the jerk by using the Doppler effect of the radar, it may be possible to take action within a shorter time, since the low frequency vibration may be detected earlier. Detection of the stress or in particular a low frequency vibration may be possible within approximately 1/5 of the revolution of the blade or of the rotor. Jerk could cause single events which could be so strong and heavy that the blade breaks or gets some cracks. The jerk or in general the stress related quantity may be detected when the blade comes into the range of the radar unit or in general sensor.

The analysis module 11 or a separate element may comprise a storage or memory, in particular for each blade, where the actual response (and optionally other data) from the blade and the state of the last (previous) revolution(s) may be stored in particular for comparison. The value of the jerk may be best detected close to the tower, i.e. when the rotor blade passes the tower. Further, sensor fusion may be possible to enable a 360° measurement or following.

According to an embodiment of the present invention, a wind turbine may comprise at least one Doppler radar unit and a processing unit configured to receive measurement data from the radar unit and to determine by analysis of the Doppler shift in the received radar signals due to movement of the blades towards or away from the turbine tower, the jerk of the blade movement in the direction towards or away from the tower and/or edgewise movement. Thereby, the processing unit may be configured to calculate properties of the blade jerk based on the temporal derivation of change of the Doppler shift caused by the jerk in a given time. The jerk is proportional to the temporal derivation of the change of Doppler shift per time.

The Doppler shift may also be referred to as a frequency response in that the system may be configured to determine the frequency response. The jerk of the tower side and the opposite side of the blade may be derived from respective identified signals. The controller may be configured to shut down the wind turbine when the detected jerk of the blade in the direction towards or away from the turbine tower exceeds a predetermined stress value.

The controller may be configured to curtail pitch responses and/or electrical load (torque) changes to reduce the jerk of the blade. Thereby, pitch angle control and/or generator torque control may be performed.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Method of determining a value (12) of a stress related quantity of a rotor blade (3) of a wind turbine (1), the method comprising:
emitting a primary radar signal (9) towards a portion (21, 22) of the blade (3);
receiving a secondary radar signal (10) emanating from the blade (3) due to interaction with the primary radar signal (9);
analysing at least the received secondary radar signal (10); and
deriving, based on the analysis, the value (12) of the stress related quantity as related to or indicating a blade acceleration and/or a first temporal derivative of the blade acceleration and/or a higher temporal derivative of the blade acceleration.

2. Method according to the preceding claim, wherein analysing at least the received secondary radar signal (10) comprises:
determining a frequency shift (Δf) of the secondary radar signal (10) relative to the primary radar signal (9);
deriving the stress related quantity (12) based on a temporal change of the frequency shift, in particular the temporal change of the frequency shift per time interval.

3. Method according to one of the preceding claims, wherein the stress related quantity (12) of the rotor blade includes the blade acceleration, in particular determined as a temporal derivative or temporal differential quotient of the frequency shift.

4. Method according to one of the preceding claims, wherein the stress related quantity of the rotor blade includes jerk (51), in particular determined as a second temporal derivative or second temporal differential quotient of the frequency shift,
wherein deriving the value of the stress related quantity in particular includes to determine a sign of a value of the jerk (51).

5. Method according to one of the preceding claims, wherein deriving the value (12) of the stress related quantity includes to determine values of the jerk (51) at a first surface (21) of the rotor blade (3) and a second surface (22) of the rotor blade (3), the first surface being an outer surface of the blade facing the tower (5), the second surface being an inner surface of the blade facing the tower (5) and being spaced apart from the first surface.

6. Method according to one of the preceding claims when referred to claim 2, wherein the frequency shift is caused by blade (3) movement including at least one of:
movement (23) away and towards the tower (5), in particular away and towards from a radar equipment mounted at the tower, in particular movement out of a rotation plane and/or
edgewise movement, substantially in a rotation plane.

7. Method according to one of the preceding claims, further comprising:
determining, later in time, in particular after at least one more revolution, a further value of the stress related quantity;
comparing the value with the further value and/or at least one previous value, in order to determine stress of the rotor blade.

8. Method of controlling a wind turbine (1) comprising plural rotor blades (3) mounted on a rotation shaft (2), the method comprising:
performing a method of determining a value (12) of a stress related quantity of a rotor blade of the wind turbine according to one of the preceding claims; and
controlling the wind turbine (1) based on the value (12) of the stress related quantity.

9. Method according to the preceding claim, wherein controlling the wind turbine comprises:
yawing (14) a nacelle (4) harboring the rotation shaft (2) at which the plural rotor blade (3) are mounted and/or
pitching (17) at least one rotor blade (3) and/or
controlling (20) generator torque and/or power based on the value (12) of the stress related quantity of the rotor blade.

10. Method according to the preceding claim, wherein the wind turbine (1) is controlled such that the value of the stress related quantity of the rotor blade is substantially at a stress reference value or below a stress threshold value, in particular comprising smoothed control of pitching and/or smoothed control of yawing and/or curtailed pitching.

11. Method according to one of the preceding claims 8 to 10,
wherein controlling the wind turbine comprises to employ a cascade control (13a) comprising:
an inner control loop (48) with feedback (49) of a measured inner control variable, the inner control variable comprising pitch angle or yaw position or generator torque or generator power; and
an outer control loop (50) with feedback (51) of a measured outer control variable, the outer control variable comprising the stress related quantity, in particular jerk,
wherein the outer control loop (50) receives a difference (53) between a reference value (52) for the outer control variable, in particular a stress reference value or jerk reference value, and an actual value (51) of the outer control variable as an input to an outer controller (54) which derives therefrom a reference value (55) or reference offset value, in particular reference pitch angle or reference yaw angle or reference torque, for the inner control variable,
wherein a difference (58) between the reference value (55) of the inner control variable and the actual value (49) of the inner control variable is supplied to an inner controller (56).

12. Method according to one of the preceding claims 8 to 11, wherein controlling the wind turbine comprises:
shutting down the wind turbine (1), if the value (12) of the stress related quantity and/or the jerk value exceeds a stress threshold value, in particular for longer than a stress time interval.

13. Arrangement (7) for determining a value (12) of a stress related quantity of a rotor blade (3) of a wind turbine (1), the arrangement comprising:
a radar emitter (32) configured to emit a primary radar signal (9) towards a portion of the blade;
a radar receiver (33) configured to receive a secondary radar signal (10) emanating from the blade due to interaction with the primary radar signal (9);
an analysis module (11) configured:
to analyse at least the received secondary radar signal (10);
to derive, based on the analysis, the value (12) of the stress related quantity as related to or indicating a blade acceleration and/or a first temporal derivative of the blade acceleration and/or a higher temporal derivative of the blade acceleration.

14. Controller (6) for controlling a wind turbine comprising plural rotor blades mounted on a rotation shaft, the controller comprising:
an arrangement (7) for determining a value of a stress related quantity of a rotor blade of the wind turbine according to the preceding claim;
a control module (13) configured to control the wind turbine based on the value of the stress related quantity.

15. Wind turbine (1), comprising:
a rotation shaft (2) having plural rotor blades (3) mounted thereon;
a controller (6) according to the preceding claim.

## Patentansprüche

1. Verfahren zum Bestimmen eines Werts (12) einer spannungsbezogenen Größe eines Rotorblatts (3) einer Windenergieanlage (1), wobei das Verfahren Folgendes umfasst:
Emittieren eines primären Radarsignals (9) zu einem Teil (21, 22) des Blatts (3);
Empfangen eines sekundären Radarsignals (10), das aufgrund einer Wechselwirkung mit dem primären Radarsignal (9) von dem Blatt (3) ausgeht;
Analysieren mindestens des empfangenen sekundären Radarsignals (10); und
Ableiten, basierend auf der Analyse, des Werts (12) der spannungsbezogenen Größe als auf eine Blattbeschleunigung und/oder eine erste zeitliche Ableitung der Blattbeschleunigung und/oder eine höhere zeitliche Ableitung der Blattbeschleunigung bezogen oder diese angebend.

2. Verfahren nach dem vorhergehenden Anspruch, wobei das Analysieren mindestens des empfangenen sekundären Radarsignals (10) Folgendes umfasst:
Bestimmen einer Frequenzverschiebung (Δf) des sekundären Radarsignals (10) relativ zu dem primären Radarsignal (9);
Ableiten der spannungsbezogenen Größe (12) basierend auf einer zeitlichen Änderung der Frequenzverschiebung, insbesondere der zeitlichen Änderung der Frequenzverschiebung pro Zeitintervall.

3. Verfahren nach einem der vorhergehenden Ansprüche, wobei die spannungsbezogene Größe (12) des Rotorblatts die Blattbeschleunigung beinhaltet, die insbesondere als eine zeitliche Ableitung oder ein zeitlicher Differentialquotient der Frequenzverschiebung bestimmt ist.

4. Verfahren nach einem der vorhergehenden Ansprüche, wobei die spannungsbezogene Größe des Rotorblatts einen Ruck (51) beinhaltet, der insbesondere als eine zweite zeitliche Ableitung oder ein zweiter zeitlicher Differentialquotient der Frequenzverschiebung bestimmt ist,
wobei das Ableiten des Werts der spannungsbezogenen Größe insbesondere Bestimmen eines Vorzeichens eines Werts des Rucks (51) beinhaltet.

5. Verfahren nach einem der vorhergehenden Ansprüche, wobei das Ableiten des Werts (12) der spannungsbezogenen Größe Bestimmen von Werten des Rucks (51) an einer ersten Oberfläche (21) des Rotorblatts (3) und einer zweiten Oberfläche (22) des Rotorblatts (3) beinhaltet, wobei die erste Oberfläche eine Außenfläche des Blatts ist, die dem Turm (5) zugewandt ist, wobei die zweite Oberfläche eine Innenfläche des Blatts ist, die dem Turm (5) zugewandt und von der ersten Oberfläche beabstandet ist.

6. Verfahren nach einem der vorhergehenden Ansprüche, wenn auf Anspruch 2 bezogen, wobei die Frequenzverschiebung durch eine Bewegung des Blatts (3) verursacht wird, die mindestens eines von Folgendem beinhaltet:
eine Bewegung (23) vom Turm (5) weg und zu diesem hin, insbesondere von einer am Turm angebrachten Radareinrichtung weg und zu dieser hin, insbesondere eine Bewegung aus einer Rotationsebene heraus und/oder
eine kantenweise Bewegung, im Wesentlichen in einer Rotationsebene.

7. Verfahren nach einem der vorhergehenden Ansprüche, ferner umfassend:
Bestimmen, zu einem späteren Zeitpunkt, insbesondere nach mindestens einer weiteren Umdrehung, eines weiteren Werts der spannungsbezogenen Größe;
Vergleichen des Wertes mit dem weiteren Wert und/oder mindestens einem vorhergehenden Wert, um die Spannung des Rotorblatts zu bestimmen.

8. Verfahren zum Steuern einer Windenergieanlage (1), die mehrere Rotorblätter (3) umfasst, die auf einer Rotationswelle (2) montiert sind, wobei das Verfahren Folgendes umfasst:
Durchführen eines Verfahrens zum Bestimmen eines Werts (12) einer spannungsbezogenen Größe eines Rotorblatts der Windenergieanlage nach einem der vorhergehenden Ansprüche; und
Steuern der Windenergieanlage (1) basierend auf dem Wert (12) der spannungsbezogenen Größe.

9. Verfahren nach dem vorhergehenden Anspruch, wobei das Steuern der Windenergieanlage Folgendes umfasst:
Gieren (14) einer Gondel (4), die die Rotationswelle (2) beherbergt, an der die mehreren Rotorblätter (3) montiert sind,
und/oder
Nicken (17) mindestens eines Rotorblatts (3) und/oder
Steuern (20) eines Generatormoments und/oder einer Leistung basierend auf dem Wert (12) der spannungsbezogenen Größe des Rotorblatts.

10. Verfahren nach dem vorhergehenden Anspruch, wobei die Windenergieanlage (1) so gesteuert wird, dass der Wert der spannungsbezogenen Größe des Rotorblatts im Wesentlichen bei einem Spannungsreferenzwert oder unter einem Spannungsschwellenwert liegt, insbesondere umfassend eine geglättete Steuerung des Nickens und/oder eine geglättete Steuerung des Gierens und/oder ein eingeschränktes Nicken.

11. Verfahren nach einem der vorhergehenden Ansprüche 8 bis 10, wobei das Steuern der Windenergieanlage den Einsatz einer Kaskadensteuerung (13a) umfasst, die Folgendes umfasst:
einen inneren Steuerkreis (48) mit einer Rückkopplung (49) einer gemessenen inneren Steuervariablen, wobei die innere Steuervariable einen Nickwinkel oder eine Gierposition oder ein Generatormoment oder eine Generatorleistung umfasst; und
einen äußeren Steuerkreis (50) mit einer Rückkopplung (51) einer gemessenen äußeren Steuervariablen, wobei die äußere Steuervariable die spannungsbezogene Größe, insbesondere einen Ruck, umfasst,
wobei der äußere Steuerkreis (50) eine Differenz (53) zwischen einem Referenzwert (52) für die äußere Steuervariable, insbesondere einem Spannungsreferenzwert oder einem Ruckreferenzwert, und einen Istwert (51) der äußeren Steuervariablen als eine Eingabe zu einer äußeren Steuerung (54) empfängt, die daraus einen Referenzwert (55) oder Referenzversatzwert, insbesondere einen Referenznickwinkel oder Referenzgierwinkel oder ein Referenzmoment, für die innere Steuervariable ableitet, wobei eine Differenz (58) zwischen dem Referenzwert (55) der inneren Steuervariablen und dem Istwert (49) der inneren Steuervariablen an eine innere Steuerung (56) geliefert wird.

12. Verfahren nach einem der vorhergehenden Ansprüche 8 bis 11, wobei das Steuern der Windenergieanlage Folgendes umfasst:
Abschalten der Windenergieanlage (1), wenn der Wert (12) der spannungsbezogenen Größe und/oder der Ruckwert einen Spannungsschwellwert, insbesondere länger als ein Spannungszeitintervall, überschreitet.

13. Anordnung (7) zum Bestimmen eines Werts (12) einer spannungsbezogenen Größe eines Rotorblatts (3) einer Windenergieanlage (1), wobei die Anordnung Folgendes umfasst:
einen Radaremitter (32), der dazu ausgelegt ist, ein primäres Radarsignal (9) zu einem Teil des Blatts zu emittieren;
einen Radarempfänger (33), der dazu ausgelegt ist, ein sekundäres Radarsignal (10) zu empfangen, das aufgrund einer Wechselwirkung mit dem primären Radarsignal (9) von dem Blatt ausgeht;
ein Analysemodul (11), das zu Folgendem ausgelegt ist:
Analysieren mindestens des empfangenen sekundären Radarsignals (10);
Ableiten, basierend auf der Analyse, des Werts (12) der spannungsbezogenen Größe als auf eine Blattbeschleunigung und/oder eine erste zeitliche Ableitung der Blattbeschleunigung und/oder eine höhere zeitliche Ableitung der Blattbeschleunigung bezogen oder diese angebend.

14. Steuerung (6) zum Steuern einer Windenergieanlage, die mehrere Rotorblätter umfasst, die auf einer Rotationswelle montiert sind, wobei die Steuerung Folgendes umfasst:
eine Anordnung (7) zum Bestimmen eines Werts einer spannungsbezogenen Größe eines Rotorblatts der Windenergieanlage nach dem vorhergehenden Anspruch;
ein Steuermodul (13), das dazu ausgelegt ist, die Windenergieanlage basierend auf dem Wert der spannungsbezogenen Größe zu steuern.

15. Windenergieanlage (1), umfassend:
eine Rotationswelle (2) mit mehreren darauf montierten Rotorblättern (3);
eine Steuerung (6) nach dem vorhergehenden Anspruch.

## Revendications

1. Procédé de détermination d'une valeur (12) d'une grandeur liée à la contrainte d'une pale de rotor (3) d'une éolienne (1), le procédé comprenant :
l'émission d'un signal radar primaire (9) vers une partie (21, 22) de la pale (3) ;
la réception d'un signal radar secondaire (10) émanant de la pale (3) à cause de l'interaction avec le signal radar primaire (9) ;
l'analyse d'au moins le signal radar secondaire (10) reçu ; et
la dérivation, sur la base de l'analyse, de la valeur (12) de la grandeur liée à la contrainte comme liée à ou indicative d'une accélération de pale et/ou une dérivée temporelle première de l'accélération de pale et/ou une dérivée temporelle supérieure de l'accélération de pale.

2. Procédé selon la revendication précédente, dans lequel l'analyse d'au moins le signal radar secondaire (10) reçu comprend :
la détermination d'un déphasage (Δf) du signal radar secondaire (10) par rapport au signal radar primaire (9) ;
la dérivation de la grandeur liée à la contrainte (12) sur la base d'un changement temporel du déphasage, en particulier le changement temporel du déphasage par intervalle de temps.

3. Procédé selon l'une des revendications précédentes, dans lequel la grandeur liée à la contrainte (12) de la pale de rotor comporte l'accélération de pale, déterminée en particulier comme une dérivée temporelle ou un quotient différentiel temporel du déphasage.

4. Procédé selon l'une des revendications précédentes, dans lequel la grandeur liée à la contrainte de la pale de rotor comporte une secousse (51), déterminée en particulier comme une dérivée temporelle seconde ou un quotient différentiel temporel second du déphasage,
dans lequel la dérivation de la valeur de la grandeur liée à la contrainte comporte en particulier la détermination d'un signe d'une valeur de la secousse (51).

5. Procédé selon l'une des revendications précédentes, dans lequel la dérivation de la valeur (12) de la grandeur liée à la contrainte comporte la détermination de valeurs de la secousse (51) au niveau d'une première surface (21) de la pale de rotor (3) et d'une deuxième surface (22) de la pale de rotor (3), la première surface étant une surface externe de la pale faisant face à la tour (5), la deuxième surface étant une surface interne de la pale faisant face à la tour (5) et étant espacée de la première surface.

6. Procédé selon l'une des revendications précédentes lorsqu'elle dépend de la revendication 2, dans lequel le déphasage est causé par un mouvement de pale (3) comportant au moins l'un parmi :
un mouvement (23) s'éloignant et s'approchant de la tour (5), en particulier s'éloignant et s'approchant d'un équipement radar monté au niveau de la tour, en particulier un mouvement hors d'un plan de rotation ; et/ou
un mouvement dans le sens de la traînée, sensiblement dans un plan de rotation.

7. Procédé selon l'une des revendications précédentes, comprenant en outre :
la détermination, plus tard dans le temps, en particulier après au moins un autre tour complet, d'une valeur supplémentaire de la grandeur liée à la contrainte ;
la comparaison de la valeur avec la valeur supplémentaire et/ou au moins une valeur précédente, afin de déterminer la contrainte de la pale de rotor.

8. Procédé de contrôle d'une éolienne (1) comprenant plusieurs pales de rotor (3) montées sur un arbre de rotation (2), le procédé comprenant :
la réalisation d'un procédé de détermination d'une valeur (12) d'une grandeur liée à la contrainte d'une pale de rotor de l'éolienne selon l'une des revendications précédentes ; et
le contrôle de l'éolienne (1) sur la base de la valeur (12) de la grandeur liée à la contrainte.

9. Procédé selon la revendication précédente, dans lequel le contrôle de l'éolienne comprend :
le changement de l'orientation en azimut (14) d'une nacelle (4) supportant l'arbre de rotation (2) sur lequel les plusieurs pales de rotor (3) sont montées ; et/ou
le changement du calage (17) d'au moins une pale de rotor (3) ; et/ou
le contrôle (20) du couple et/ou de la puissance de générateur sur la base de la valeur (12) de la grandeur liée à la contrainte de la pale de rotor.

10. Procédé selon la revendication précédente, dans lequel l'éolienne (1) est contrôlée de telle sorte que la valeur de la grandeur liée à la contrainte de la pale de rotor soit sensiblement égale à une valeur de référence de contrainte ou inférieure à une valeur seuil de contrainte, comprenant en particulier un contrôle lissé de calage et/ou un contrôle lissé d'orientation en azimut et/ou un calage restreint.

11. Procédé selon l'une des revendications précédentes 8 à 10, dans lequel le contrôle de l'éolienne comprend l'emploi d'un contrôle en cascade (13a) comprenant :
une boucle de contrôle interne (48) avec rétroaction (49) d'une variable de contrôle interne mesurée, la variable de contrôle interne comprenant un angle de calage ou une position d'orientation en azimut ou un couple de générateur ou une puissance de générateur ; et
une boucle de contrôle externe (50) avec rétroaction (51) d'une variable de contrôle externe mesurée, la variable de contrôle externe comprenant la grandeur liée à la contrainte, en particulier une secousse,
dans lequel la boucle de contrôle externe (50) reçoit une différence (53) entre une valeur de référence (52) pour la variable de contrôle externe, en particulier une valeur de référence de contrainte ou une valeur de référence de secousse, et une valeur réelle (51) de la variable de contrôle externe comme une entrée dans un dispositif de contrôle externe (54) qui en déduit une valeur de référence (55) ou une valeur de décalage de référence, en particulier un angle de calage de référence ou un angle d'orientation en azimut de référence ou un couple de référence, pour la variable de contrôle interne, dans lequel une différence (58) entre la valeur de référence (55) de la variable de contrôle interne et la valeur réelle (49) de la variable de contrôle interne est fournie à un dispositif de contrôle interne (56).

12. Procédé selon l'une des revendications précédentes 8 à 11, dans lequel le contrôle de l'éolienne comprend :
l'arrêt de l'éolienne (1), si la valeur (12) de la grandeur liée à la contrainte et/ou la valeur de secousse dépasse une valeur seuil de contrainte, en particulier pendant plus d'un intervalle de temps de contrainte.

13. Agencement (7) pour la détermination d'une valeur (12) d'une grandeur liée à la contrainte d'une pale de rotor (3) d'une éolienne (1), l'agencement comprenant :
un émetteur radar (32) configuré pour émettre un signal radar primaire (9) vers une partie de la pale ;
un récepteur radar (33) configuré pour recevoir un signal radar secondaire (10) émanant de la pale à cause de l'interaction avec le signal radar primaire (9) ;
un module d'analyse (11) configuré :
pour analyser au moins le signal radar secondaire (10) reçu ;
pour dériver, sur la base de l'analyse, la valeur (12) de la grandeur liée à la contrainte comme liée à ou indicative d'une accélération de pale et/ou une dérivée temporelle première de l'accélération de pale et/ou une dérivée temporelle supérieure de l'accélération de pale.

14. Dispositif de contrôle (6) pour contrôler une éolienne comprenant plusieurs pales de rotor montées sur un arbre de rotation, le dispositif de contrôle comprenant :
un agencement (7) pour déterminer une valeur d'une grandeur liée à la contrainte d'une pale de rotor de l'éolienne selon la revendication précédente ;
un module de contrôle (13) configuré pour contrôler l'éolienne sur la base de la valeur de la grandeur liée à la contrainte.

15. Éolienne (1), comprenant :
un arbre de rotation (2) présentant plusieurs pales de rotor (3) montées sur celui-ci ;
un dispositif de contrôle (6) selon la revendication précédente.
